(19) Europäisches Patentamt

European Patent Office

Office européen des brevets

(11) Veröffentlichungsnummer: **0 356 920 B1**

(12) **EUROPÄISCHE PATENTSCHRIFT**

(45) Veröffentlichungstag der Patentschrift: **05.05.93**

(21) Anmeldenummer: **89115663.0**

(22) Anmeldetag: **25.08.89**

(51) Int. Cl.⁵: **C09D 167/08**, C09D 175/04, C09D 157/00

(54) **Wasserverdünnbare lufttrocknende Beschichtungsmittel.**

(30) Priorität: **31.08.88 AT 2131/88**

(43) Veröffentlichungstag der Anmeldung:
**07.03.90 Patentblatt 90/10**

(45) Bekanntmachung des Hinweises auf die
Patenterteilung:
**05.05.93 Patentblatt 93/18**

(84) Benannte Vertragsstaaten:
**BE CH DE ES FR GB GR IT LI NL SE**

(56) Entgegenhaltungen:
**EP-A- 0 295 403**
**DD-B- 238 568**
**DE-A- 3 523 792**
**FR-A- 2 253 800**

(73) Patentinhaber: **Vianova Kunstharz Aktiengesellschaft
Bundesstrasse 175
A-8402 Werndorf(AT)**

(72) Erfinder: **Awad, Rami-Raimund, Dipl.-Ing.
Papiermühlgasse 28
A-8020 Graz(AT)**
Erfinder: **Dworak, Gert, Dr.
Dr. Robert Grafstrasse 25
A-8010 Graz(AT)**
Erfinder: **Zückert, Bertram, Dr.
Krottendorferstrasse 90
A-8052 Graz(AT)**
Erfinder: **Weger, Walter, Dr.
Leechgasse 82
A-8010 Graz(AT)**

**Beschreibung**

Die Erfindung betrifft wasserverdünnbare, lufttrocknende Beschichtungsmittel auf der Basis von Kombinationen wasserverdünnbarer Alkydharze mit wäßrigen Polymerdispersionen und maleinisierten Ölen bzw. Fettsäuren. Die Produkte dienen, gegebenenfalls nach Einarbeitung von Pigmenten, Füllstoffen und/oder dem jeweiligen Verwendungszweck entsprechenden Lackhilfsmitteln oder Lackzusätzen, als Beschichtungsmittel für Holz − und Metalluntergründe, insbesonders für Streichlacke und Holzlasuren.

Der Ersatz organischer Lösemittel durch Wasser in lufttrocknenden Farben und Lacken ist seit langem ein Anliegen der einschlägigen Industrie und ihrer Entwicklungsabteilungen. Trotz der großen Anzahl von diesbezüglichen Schutzrechten wurden bisher nur wenig befriedigende Produkte angeboten.

Es wurde nun gefunden, daß durch eine Kombination von spezifischen wasserverdünnbaren Alkydharzen mit Polymerdispersionen und Maleinatölen wasserverdünnbare, lufttrocknende Beschichtungsmittel erhalten werden, die den vielfältigen Ansprüchen des Verbrauchers wesentlich besser entsprechen als die bisher auf dem Markt befindlichen Produkte.

Die vorliegende Erfindung betrifft demgemäß, nach teilweiser oder vollständiger Neutralisation der Carboxylgruppen mit Basen, wasserverdünnbare, lufttrocknende Überzugsmittel, bestehend aus

(A) 4 bis 95 Gew. − %, vorzugsweise mindestens 30 Gew. − %, eines wasserverdünnbaren Alkydharzes, welches einen Gehalt von 30 bis 70 % an oxidativ trocknenden Fettsäuren aufweist und dessen freie, einer Säurezahl von 25 bis 70 mg KOH/g entsprechenden Carboxylgruppen zu mindestens 80 % von Methacrylsäureeinheiten stammen, die gemeinsam mit anderen Vinyl − und/oder (Meth)acrylmonomeren auf zumindestens einen Teil der Fettsäuren aufgepfropft sind,

(B) 4 bis 95 Gew. − %, vorzugsweise mindestens 20 Gew. − %, einer wäßrigen Polymerdispersion auf Basis von (Meth)acrylsäureester − und/oder Butadien − und/oder Styrolcopolymerisaten, und/oder einer wäßrigen Polyurethandispersion,

(C) 1 bis 30 Gew. − %, vorzugsweise 5 bis 20 Gew. − %, eines Adduktes von Maleinsäureanhydrid an trocknende Öle und/oder an die solche Öle aufbauenden ungesättigten Fettsäuren und/oder an synthetisch hergestellte Ester dieser Fettsäuren mit Di − oder Polyolen, wobei dessen Anhydridstrukturen durch Wasser und/oder Monoalkohole mit 1 bis 10 C − Atomen aufgeschlossen sind, und welches eine Säurezahl zwischen 40 und 280 mg KOH/g aufweist, und

(D) gegebenenfalls Pigmenten, Füllstoffen und/oder dem jeweiligen Verwendungszweck entsprechenden Lackhilfsmitteln und/ oder Zusatzstoffen,

mit der Maßgabe, daß die Summe der Prozentzahlen der Komponenten (A) bis (C) 100 ergibt.

Die erfindungsgemäßen Beschichtungsmittel lassen sich gut verarbeiten und ergeben Filme mit ausgezeichnetem Verlauf, hoher Elastizität und hervorragender Wetterfestigkeit. Daraus formulierte Holzlasuren zeigen gute Penetration und Schutzwirkung. Der Gehalt an organischen Hilfslösemitteln kann auf unter 5 Gew. − % des flüchtigen Lackanteiles gesenkt werden.

Als Komponente (A) der erfindungsgemäßen Kombination werden Alkydharze verwendet, wie sie in der EP 0 295 403 A 2 beschrieben werden.

Diese Alkydharze haben einen Gehalt an freien Säuregruppen entsprechend einer Säurezahl von 25 bis 70 mg KOH/g, wobei diese Säuregruppen zu mindestens 80 % von Methacrylsäureeinheiten stammen, welche zusammen mit anderen Vinyl − und/oder (Meth)acrylmonomeren in einem gesonderten Reaktionsschritt auf einen Teil der eingesetzten ungesättigten Fettsäuren aufgepfropft wurden.

Der Gehalt an trocknenden und/oder halbtrocknenden Fettsäuren liegt zwischen 30 und 70 Gew. − %. Von diesen Fettsäuren wird ein Anteil von 10 bis 40 Gew. − %, bezogen auf das Harzgewicht, in Form des Fettsäure − Methacrylsäure − Copolymeren eingebracht.

Weiters enthalten die Alkydharze 10 bis 25 Gew. − % an Polyalkoholen mit 2 bis 6 Hydroxylgruppen, 10 bis 20 Gew. − % an aromatischen und/oder aliphatischen Dicarbonsäuren, 0 bis 15 Gew. − % an cyclischen und/oder polycyclischen Monocarbonsäuren und 0 bis 5 Gew. − % eines Polyethylenglykols. Die Endprodukte weisen eine Grenzviskositätszahl zwischen 7 und 16 ml/g, gemessen in Chloroform bei 20˚C auf.

Für die Herstellung der gepfropften Fettsäuren werden ungesättigte Fettsäuren mit einer Jodzahl über 135 (bevorzugt 160 − 200) und mit überwiegend isolierter Stellung der Doppelbindungen eingesetzt. Geeignet sind Leinölfettsäure, Safflorfettsäure sowie die Fettsäuren des Hanf −, Lallemantia −, Perilla − und Stillingiaöles, gegebenenfalls in Abmischung mit bis zu 25 Gew − % an dehydratisierter Rizinusölfettsäure oder einer vergleichbaren, durch Isomerisierung hergestellten Conjuen − Fettsäure.

Die Fettsäure − Pfropfcopolymerisate sind aus 30 bis 50 Gew. − % der obengenannten Fettsäuren, 10 bis 25 Gew. − % Methacrylsäure und 30 bis 55 Gew. − % anderer Monomeren, welche neben der C − C − Doppelbindung keine weiteren funktionellen Gruppen tragen, zusammengesetzt, wobei die Summe der Prozentanteile 100 ergeben muß. Als Monomere, welche neben der Methacrylsäure eingesetzt werden, dienen vorzugsweise (Meth)acrylverbindungen und Vinylverbindungen, mit der Maßgabe, daß sie zu mindestens 80 Gew.−% aus solchen bestehen, welche benzinlösliche Homopolymere bilden.

Geeignet sind u. a. Ester der Methacrylsäure und Acrylsäure mit n−Butanol, Isobutanol, tert.−Butanol oder 2−Ethylhexanol. Zum Einstellen der optimalen Filmhärte des Copolymeren wird Vinyltoluol verwendet. In kleinen Anteilen (bis zu 20 Gew.−%) können auch Monomere, welche benzinunlösliche Polymere bilden, wie Methylmethacrylat oder Styrol mitverwendet werden.

Die Pfropfcopolymerisation wird so durchgeführt, daß die Hauptmenge der Fettsäure, gegebenenfalls in Gegenwart geringer Anteile inerter Lösemittel, auf 110 − 150°C erhitzt wird und die Mischung der Monomeren mit einem geeigneten Initiator und der restlichen Fettsäure im Verlauf von einigen Stunden zudosiert wird. Die Reaktionsmischung wird anschließend so lange weiter auf Reaktionstemperatur gehalten, bis eine Rückstandsbestimmung einen Polymerisationsumsatz über 95 % ergibt. Als Initiatoren kommen u. a. Di−tert.−Butylperoxid, tert.−Butylperbenzoat und Cumolhydroperoxid in Betracht.

Die so hergestellten Fettsäure−Methacrylsäure−Pfropfcopolymerisate werden zusammen mit weiteren Fettsäuren zu wasserlöslichen Alkydharzen verarbeitet. Als Fettsäuren können in dieser Stufe pflanzliche und tierische Fettsäuren mit einer Jodzahl über 120 eingesetzt werden, wobei bevorzugt ein Teil der Doppelbindungen in konjugierter Stellung vorliegen soll. Geeignet sind u. a. Soja−, Leinöl−, Saffloröl, Tallöl− sowie Rizinenfettsäure.

Als Polyole und Dicarbonsäuren kommen für die Herstellung der Alkydharze alle Produkte in Betracht, welche auch zur Herstellung konventioneller Alkydharze eingesetzt werden. Bevorzugt werden Trimethylolethan, Trimethylolpropan, Pentaerythrit und Sorbit als Polyole und Ortho− oder Isophthalsäure sowie Adipinsäure als Dicarbonsäuren eingesetzt. Zur Regulierung der Filmhärte können ferner cyclische oder polycylische Monocarbonsäuren, wie Harzsäuren oder Benzoesäure verwendet werden. Gegebenenfalls können auch Anteile von bis zu 5 Gew.−% von Polyethylenglykolen mit einem Molgewicht von 1000 bis 3000 eingebaut werden.

Die Veresterung kann durch gemeinsames Erhitzen aller Komponenten erfolgen. Bei Verwendung hochschmelzender Rohstoffe, wie Pentaerythrit und Isophthalsäure, ist es jedoch ratsam, zunächst Fettsäuren, Polyole und Dicarbonsäuren bis zum Erreichen einer klaren Schmelze allein zu verestern und erst dann das Fettsäure−Methacrylsäure−Copolymerisat zuzusetzen. Die Veresterung wird dann so weit getrieben, daß der Endwert der Säurezahl etwa 90 % der Konzentration der Carboxylgruppen der Methacrylsäure entspricht. Da diese Säuregruppen in den Copolymerketten tertiäre Stellung aufweisen und somit sterisch behindert sind, kann angenommen werden, daß sie wesentlich langsamer als die anderen Carboxylgruppen verestern und nach Beendigung der Reaktion den Hauptanteil der freien Säuregruppen liefern, welche die Wasserlöslichkeit der Harze bewirken.

Als organische, wasserverträgliche Co−Lösemittel sind vor allem die Methyl−, Ethyl, und Butyl−Ether des Ethylenglykols, Diethylenglykols, 1,2−Propylenglykols und Dipropylenglykols geeignet. Anteilweise können auch nur begrenzt wasserverträgliche Lösemittel wie n− und iso−Butanol verwendet werden. Der Gesamtgehalt an organischen Lösemitteln im fertigen Lack soll möglichst niedrig gehalten werden.

Zur Neutralisation der Säuregruppen sind neben dem bevorzugten Ammoniak u. a. Triethylamin, Dimethylethanolamin, KOH, NaOH und LiOH geeignet.

Die Alkydharze können entweder in neutralisierter oder nichtneutralisierter Form in einer Lösung in wasserverträglichen Lösemitteln zum Einsatz kommen. Bevorzugt werden Produkte jedoch in Form wäßriger Emulsionen angewendet, wei dadurch der Gehalt an organischen Lösungsmitteln wesentlich reduziert werden kann.

Die Komponente (A) wird, bezogen auf die Summe der Bindemittel, d. h. der Komponenten (A) bis (C), in einer Menge von 4 bis 95 Gew.−% eingesetzt. Vorzugsweise enthält die Kombination (A) bis (C) mindestens 30 Gew.−% dieser Komponente.

Als Komponente (B) werden wäßrige Polymerdispersionen auf Basis von (Meth)acrylsäureester− und/oder Butadien− und/oder Styrolcopolymerisaten, sowie auch Polyurethandispersionen eingesetzt. Produkte dieser Art sind unter verschiedenen Markenbezeichnungen im Handel erhältlich. (Als Beispiele seien hier angeführt: MOWILITH VSW 6866, MOWILITH DM 772 (Acrylatcopolymerdispersionen der HOECHST AG), NEOCRYL XK 62 (Styrol−Acrylatcopolymerdispersion der POLYVINYL CHEMIE), ACRONAL 603 (Acrylatdispersion der BASF AG), LITEX CA (Styrol−Butadiencopolymerdispersion der Chemischen Werke Hüls AG), DAOTAN VTW 1210 (Polyurethandispersion der HOECHST AG). Alle angeführten Produktnamen sind registrierte Warenzeichen der genannten Herstellerfirmen.

Die Komponente (B) wird, bezogen auf die Summe der Bindemittel, d. h. der Komponenten (A) bis (C), in einer Menge von 4 bis 95 Gew.−% eingesetzt. Vorzugsweise enthält die Kombination mindestens 20 Gew.−% dieser Komponente.

EP 0 356 920 B1

Die Komponente (C), welche bezogen auf die Summe der Bindemittel, in einer Menge von 1 bis 30 Gew.‑%, vorzugsweise von 5 bis 20 Gew.‑%, eingesetzt wird, stellt ein Addukt von Maleinsäureanhydrid an trocknende Öle oder an die, solche Öle aufbauenden ungesättigten Fettsäuren und/oder an hydroxylfreie synthetisch hergestellte Ester dieser Fettsäuren mit Di‑ oder Polyolen dar. Die Anhydridstrukturen werden vor einer Neutralisation durch Umsetzung mit Wasser und/oder Monoalkoholen mit 1 bis 10 C‑Atomen geöffnet. Die Rohstoffe für diese Addukte sowie die Verfahren zu ihrer Herstellung sind aus der Literatur bekannt. Der Anteil an Maleinsäureanhydrid in den für die vorliegende Erfindung geeigneten Addukten beträgt zwischen 5 und 30 Gew.‑%, vorzugsweise zwischen 7,5 und 25 Gew.‑%, bezogen auf das Addukt.

Als Komponente (D) können die Überzugsmittel die üblichen Pigmente und Füllstoffe, sowie Lackhilfs‑ mittel oder Lackzusätze enthalten. Die Auswahl bzw. die Menge dieser Komponente richtet sich nach dem jeweiligen Einsatzzweck des Überzugsmittels.

Die Komponenten (A) und (C) werden vorzugsweise nach der Neutralisation der Carboxylgruppen vermischt. Die Zugabe der Komponente (B) erfolgt anschließend, gegebenenfalls nach Zusatz eines Teiles des zur Verdünnung vorgesehenen Wassers.

Die Verarbeitung der Bindemittelkombination mit den Bestandteilen der Komponente (D) erfolgt in bekannter Weise und bedarf keiner weiteren Erläuterung. Das gleiche gilt auch für die Verarbeitung der erfindungsgemäßen Beschichtungsmittel.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtsein‑ heiten.

(I) Herstellung der Komponente (A)

Herstellung des Fettsäure‑Copolymerisates A 1:

30 Tle Leinölfettsäure und 5 Tle Xylol werden auf 135 bis 140°C erwärmt. Bei dieser Temperatur wird innerhalb 6 bis 8 Stunden gleichzeitig eine Mischung aus 32 Tlen Isobutylmethacrylat, 6 Tlen Vinyltoluol und 21 Tlen Methacrylsäure sowie eine Mischung aus weiteren 11 Tlen der Leinölfettsäure, 3 Tlen tert.‑ Butylperbenzoat, 1 Tl Dibenzoylperoxid (50 %ig) und 5 Tlen Xylol gleichmäßig zugegeben. Nach Beendi‑ gung der Zugabe wird die Reaktionstemperatur beibehalten, bis eine Rückstandsbestimmung einen min‑ destens 95 %igen Polymerisationsumsatz ergibt. Bei zu langsamen Reaktionsfortgang wird der Ansatz mit 1 Tl tert.‑Butylperbenzoat versetzt. Das Copolymerisat weist eine Säurezahl von 209 mg KOH/g und eine Grenzviskositätszahl (Dimethylformamid, 20°C) von 5,5 ml/g, auf.

Herstellung des Alkydharzes

In einem geeigneten Reaktionsgefäß werden 200 Tle Safflorfettsäure, 110 Tle isomerisierte Linolsäure (ca. 50 % 9,11‑Linolsäure), 115 Tle Pentaerythrit und 100 Tle Isophthalsäure bei 230°C so lange verestert, bis eine klare Schmelze entstanden ist. Nach einer weiteren Stunde werden 340 g Fettsäure‑ Copolymerisat A 1 zugesetzt und bei 200°C reagiert, bis die angegebenen Endwerte erreicht sind. Nach Abziehen des inerten Lösemittels (aus dem Copolymer) wird der Ansatz mit Ethylenglykolmonobutylether auf einen Festkörpergehalt von 87 % eingestellt und bei 50°C mit einer verdünnten wäßrigen Ammonia‑ klösung emulgiert. Die Ammoniak‑ und Wassermenge wird so gewählt, daß ein pH‑Wert der Emulsion von 8,2 bis 8,4 und ein Festkörpergehalt von 40 % resultiert. Die Harzlösung ist eine milchige bis transparente Flüssigkeit mit ausgeprägter Strukturviskosität.

(II) Als Komponente (B) werden folgende handelsübliche Polymerdispersionen eingesetzt:

(Die Angaben wurden den technischen Merkblättern entnommen)
(B1) Feinteilige, mittelviskose Copolymerisatdispersion aus Acrylsäureestern, 46% in Wasser, Mindest‑ filmbildetemperatur ca. 40°C (DIN 53 787); Handelsname SYNTHACRYL VSW 6866 (HOECHST AG).
(B2) Feindisperse, mittelviskose Copolymerisatdispersion aus Acrylsäureestern, 46 %ig in Wasser, Mindestfilmbildetemperatur ca. 14°C (DIN 53 787); Handelsname: MOWILITH D 772 (HOECHST AG)
(B3) Niedrigviskose, feindisperse wäßrige Copolymerdispersion aus Acryl‑ und Methacrylsäureestern, 50%ig in Wasser, Mindestfilmbildetemperatur ca. 16°C (DIN 53 787); Handelsname: ACRONAL 603 (BASF AG)

4

(B4) Anionische Acryl – Styrol – Copolymerdispersion, 42 %ig in Wasser, Mindestfilmbildetemperatur ca. 30˚C (DIN 53 787); Handelsname: NEOCRYL XK 62 (POLYVINYL CHEMIE)

(B5) Wäßrige, emulgatorfreie Polyurethan – Dispersion, 40%ig in Wasser; Handelsname: DAOTAN VTW 1210 (HOECHST AG)

(II) Herstellung der Komponente (C)

Komponente (C1): In einem geeigneten Reaktionsgefäß werden unter Inertgas 700 Tle Sojaöl und 100 Tle Maleinsäureanhydrid bei 200 bis 210˚C reagiert, bis kein freies Maleinsäureanhydrid mehr nachweisbar ist. Nach Kühlen auf 110˚C werden 162 Tle Diethylenglykolmonobutylether und 3 Tle Triethylamin zugesetzt und die Reaktion bis zu einer Säurezahl von ca. 55 mg KOH/g geführt. Das Produkt wird mit Methoxypropoxypropanol auf einen Festkörpergehalt von 90 % verdünnt.

Komponente (C2) In gleicher Weise wie bei (C1) beschrieben, wird ein Addukt aus 280 Tlen Leinölfett – säure und 100 Tlen Maleinsäureanhydrid hergestellt, dessen Anhydridgruppen bei 80˚C mit 35 Tlen Methanol in Gegenwart von 3 Tlen Triethylamin geöffnet werden. Das Produkt weist eine Säurezahl von ca. 240 mg KOH/g auf und wird mit Methoxypropoxypropanol auf einen Festkörpergehalt von 90 % verdünnt.

Komponente (C3): Eine Mischung aus 150 Tlen dehydratisiertem Rizinusöl und 150 Tlen Leinöl werden unter Inertgas eine Stunde bei 250˚C gerührt und anschließend bei 200˚C mit 100 Tlen Maleinsäureanh – ydrid umgesetzt. Die Öffnung der Anhydridgruppen erfolgt bei ca. 100˚C mit 162 Tlen Diethylenglykolmo – nobutylether in Gegenwart von 2 Tlen Triethylamin. Das Reaktionsprodukt (Säurezahl ca. 90 mg KOH/g) wird auf einen Festkörpergehalt von 90 % mit Methoxypropoxypropanol verdünnt.

Beispiel 1 – 3 und Vergleichsbeispiel V (a) Wasserverdünnbare Streichlacke, weiß

Auf einer Rührwerkskugelmühle werden Pigmentanreibungen mit der Komponente (A) mit folgender Zusammensetzung hergestellt:

| Beispiel 1: | 83 Tle | Komponente (A), 40 % |
| Beispiel 2: | 115 Tle | |
| Beispiel 3 : | 177,5 Tle | |
| | 1,5 Tle | Ammoniaklösung 25 % |
| | 100 Tle | Titandioxid (Rutil) |
| | 1 Tl | Kombinationstrockner wasserverdünnbar (Co, Ba, Zr) |
| | 2 Tle | Antihautmittel (Oximbasis) |
| | 1 Tl | Entschäumer (silikonfrei) |
| | 30 Tle | Wasser |

Das Pigment – Bindemittelverhältnis dieser Pigmentpaste beträgt 3 : 1, 2 : 1 bzw. 1 : 0,7.

Für die Beispiele 1 bis 3 wird die Pigmentanreibung mit den Komponenten (B) und (C) sowie weiteren Zusatzmitteln entsprechend den Angaben der Tabelle 1 komplettiert. Das Vergleichsbeispiel V (a) enthält keine Komponente (C).

Tabelle 1

| Beispiel | 1 | 2 | 3 | V(a) |
|---|---|---|---|---|
| Pigmentpaste aus Komponente (A), siehe oben | 218,5 | 250,5 | 313,0 | 218,5 |
| Slip − und Verlaufmittel<br>Entschäumer, silikonfrei<br>Dispersion (B1), 46 %<br>(B2) | 3<br>1<br>127<br>− − | 3<br>1<br>95,7<br>− − | 3<br>1<br>− −<br>43,5 | 3<br>1<br>145<br>− − |
| Ammonikalösung, 25 %<br>Addukt (C1), 90 %<br>(C2), 90 %<br>(C3), 90 % | 1<br>10<br>− −<br>− − | 1<br>− −<br>− −<br>10 | 1<br>− −<br>10<br>− − | − −<br>− −<br>− −<br>− − |
| Lack − Festkörpergehalt<br>Pigment − Bindemittelverhältnis | 56 %<br>1:1 | 56 %<br>1:1 | 56 %<br>1:1 | 56 %<br>1:1 |

Nach Einstellung des pH − Wertes mit Ammoniaklösung auf 8,8 − 9,1 werden die Lacke auf geschlif − fene Weichholztafeln aufgebracht.

Die Prüfergebnisse sind in der Tabelle 2 zusammengefaßt.

Als weiteres Vergleichsbeispiel wurde eine handelsübliche Dispersionsfarbe für Holz auf Basis der Dispersion (B1) herangezogen (V (b)).

Die Prüfungen wurden in folgender Weise durchgeführt:

1. Streichbarkeit: Die Verarbeitbarkeit der Materialien wurde subjektiv nach einem Punktesystem (Benotung 1 = sehr gut, 5 = schlecht) beurteilt.

2. Anschlußzeit: Eine Holztafel wurde halbseitig mit dem Prüflack gestrichen. Nach jeweils 5 Minuten wurde die Überstreichbarkeit der Randzone durch streifenweisen Auftrag des Lackes geprüft. Bei der angegebenen Zeit ist der "Anschluß" nicht mehr gegeben.

3. Trocknung: Drying Recorder bei 20 ˚C und einer Schichtstärke von 150 $\mu$m Naßfilm auf Glasstreifen.

4. Überlackierbarkeit: Eine Holztafel wird mit dem Prüflack gestrichen. Nach jeweils 2 Stunden wurde die Überlackierbarkeit durch streifenweisen Auftrag des Lackes geprüft. Nach der angegebenen Zeit ist eine einwandfreie Überlackierbarkeit gegeben.

5. Lagerstabilität des Lackes: Alle Lacke waren, gegebenenfalls nach Einstellung des pH − Wertes, nach einer Lagerzeit von 4 Wochen bei 50 ˚C einwandfrei verarbeitbar.

6. Freibewitterung der Lacke bzw. Lasuren: Alle Lacke bzw. Lasuren, die die Komponente C enthalten, sind nach 12 Monaten Freibewitterung (Fichtenholztafeln, 45 ˚ gegen Süden) bezüglich Gilbung, Schmutzaufnahme, Rißbildung, Vergrauung in Ordnung.

Tabelle 2

| Beispiel | 1 | 2 | 3 | V(a) | V(b) |
|---|---|---|---|---|---|
| Streichbarkeit | 1-2 | 1 | 1 | 3-4 | 3-4 |
| Anschlußzeit (min) | 40 | 45 | 55 | 10 | 2 |
| Trocknung (25°C) | | | | | |
| klebfrei (min) | 90 | 90 | 90 | 90 | 60 |
| griffest (Stden) | 3,5 | 4 | 4 | 2,5 | 1,5 |
| Überlackierbarkeit (Stden) | 14 | 13 | 14 | 8 | 12 |
| Freibewitterungsprüfung Rißbildung | 1 | 1 | 1 | 3 | 3-4 |
| Glanzbeurteilung | 1-2 | 1-2 | 1-2 | 3 | 4 |
| Bläschenbildung | 1 | 1 | 1 | 3 | 3-4 |
| Kreidung (Schleierbildung) | 1-2 | 1-2 | 1-2 | 2-3 | 3 |

7

Beispiele 4 bis 8 und Vergleichsbeispiel V (c) Wasserverdünnbare Holzlasuren

Gemäß den folgenden Formulierungen wurden wasserverdünnbare Holzlasuren hergestellt (Tabelle 3)

Tabelle 3

| Beispiel | 4 | 5 | 6 | 7 | 8 | V(c) |
|---|---|---|---|---|---|---|
| Komponente (A), 40 % | 246,0 | 267,0 | 205,0 | 222,5 | 222,5 | 370,0 |
| Komponente (C1), 90 % | 40,0 | -- | 40,0 | -- | 20,0 | -- |
| (C3), 90 % | -- | 20,0 | -- | 20,0 | -- | -- |
| Ammoniaklösung 25 % | | 4,0 | | | | |
| Sikkativgemisch | | 4,0 | | | | |
| Fungizidlösung | | 0,5 | | | | |
| Mattierungsmittel (2) | | 32,5 | | | | |
| KW-Lösemittel (3) Mischung | | 7,0 | | | | |
| DEME (4) | | 7,0 | | | | |
| Antihautmittel (1) | | 2,0 | | | | |
| Antiabsetzmittel (5) | | 2,0 | | | | |
| Entschäumer (1) | | 2,0 | | | | |
| Verlaufmittel | | 4,0 | | | | |
| Ammoniaklösung, 25 % | 3,0 | 3,0 | 3,0 | 3,0 | 3,0 | 3,0 |
| Wasser | 170,0 | 135,0 | 202,0 | 170,0 | 164,0 | 225,0 |
| Komponente (B1) | -- | 117,0 | -- | -- | -- | -- |
| (B2) | -- | -- | 97 | -- | -- | -- |
| (B3) | 89 | -- | -- | -- | -- | 60,0 |
| (B4) | -- | -- | -- | 128 | -- | -- |
| (B5) | -- | -- | -- | -- | 134 | -- |

(1) siehe Beispiel 1 - 3
(2) Ethylenwachs/oberflächenbehandelte Kieselsäure
(3) Lackbenzin (Kp 184 - 207°C)
(4) Diethylenglykolmonoethylether
(5) modif. Rizinusöl

Die Lasuren weisen einen Festkörpergehalt von ca. 35 % auf. Nach Einstellung des pH – Wertes auf 9,2 und einer Auslaufzeit von 30 bis 35 Sekunden (DIN 53211/20˚C) wird die Lasur durch Streichen auf Fichtenholztafeln aufgebracht. Das Vergleichsbeispiel V(c) wurde ohne Adduktanteil (Komponente C) for – muliert. Als weiteres Vergleichsprodukt (Beispiel V(d)) wurde eine handelsübliche wasserverdünnbare Holz – lasur geprüft.

Die Prüfungen wurden in derselben Weise wie bei den Beispielen 1 bis 3 durchgeführt. Die Ergebnisse sind in der Tabelle 4 zusammengefaßt.

Tabelle 4

| Beispiel | 4 | 5 | 6 | 7 | 8 | V(c) | V(d) |
|---|---|---|---|---|---|---|---|
| Streichbarkeit | 1 | 1 | 1 | 1 | 1-2 | 2-3 | 2-3 |
| Trocknung (25°C) | | | | | | | |
| klebfrei (Stden) | 3 | 3 | 3 | 2 | 2 | 1 | 1 |
| griffest (Stden) | 4 | 4 | 4 | 3,5 | 3 | 1,5 | |
| Überstreichbarkeit (nach Stunden) | 3,5 | 3,5 | 5 | 5 | 3,5 | 3 | 6 |
| Freibewitterungsprüfung | | | | | | | |
| Rißbildung | 1 | 1 | 1 | 1 | 1-2 | 2 | 3-4 |
| Bläschenbildung | 1 | 1 | 1 | 1 | 1-2 | 2-3 | 2-3 |
| Kreidung | 1-2 | 1-2 | 1-2 | 1-2 | 1-2 | 2-3 | 3 |

**Patentansprüche**

1. Wasserverdünnbare, lufttrocknende Überzugsmittel, bestehend aus
   (A) 4 bis 95 Gew. – %, vorzugsweise mindestens 30 Gew. – %, eines wasserverdünnbaren Alkyd – harzes, welches einen Gehalt von 30 bis 70 % an oxidativ trocknenden Fettsäuren aufweist und dessen freie, einer Säurezahl von 25 bis 70 mg KOH/g entsprechenden Carboxylgruppen zu mindestens 80 % von Methacrylsäureeinheiten stammen, die gemeinsam mit anderen Vinyl – und/oder (Meth)acrylmonomeren auf zumindestens einen Teil der Fettsäuren aufgepfropft sind,
   B) 4 bis 95 Gew. – %, vorzugsweise mindestens 20 Gew. – %, einer wäßrigen Polymerdispersion auf Basis von (Meth)acrylsäureester – und/oder Butadien – und/oder Styrolcopolymerisaten, und/oder einer wäßrigen Polyurethandispersion,
   (C) 1 bis 30 Gew. – %, vorzugsweise 5 bis 20 Gew. – %, eines Adduktes von Maleinsäureanhydrid an trocknende Öle und/oder an die solche Öle aufbauenden ungesättigten Fettsäuren und/oder an synthetisch hergestellte Ester dieser Fettsäuren mit Di – oder Polyolen, wobei dessen Anhydrid – strukturen durch Wasser und/oder Monoalkohole mit 1 bis 10 C – Atomen aufgeschlossen sind, und welches eine Säurezahl zwischen 40 und 280 mg KOH/g aufweist, und
   (D) gegebenenfalls Pigmenten, Füllstoffen und/oder dem jeweiligen Verwendungszweck entspre – chenden Lackhilfsmitteln und/oder Zusatzstoffen,
   mit der Maßgabe, daß die Summe der Prozentzahlen der Komponenten (A) bis (C) 100 ergibt.

2. Wasserverdünnbare Beschichtungsmittel nach Anspruch 1, dadurch gekennzeichnet, daß die für die Komponente (C) eingesetzten Maleinsäureaddukte einen Gehalt an Maleinsäureanhydrid von 5 bis 30 Gew. – %, vorzugsweise von 7,5 bis 25 Gew. – %, aufweisen.

9

3. Verwendung der Beschichtungsmittel nach den Ansprüchen 1 und 2 für Streichlacke und Holzlasuren.

4. Verwendung der Beschichtungsmittel nach den Ansprüchen 1 und 2 für lösungsmittelarme Lacke, deren Menge an organischem Lösungsmittel im flüchtigen Anteil weniger als 5 Gew. – % beträgt.

**Claims**

1. Water – thinnable, air – drying coating compositions consisting of
   (A) from 4 to 95 % by weight, preferably at least 30 % by weight, of a water – thinnable alkyd resin which contains from 30 to 70 % of oxidatively drying fatty acids and whose free carboxyl groups correspond to an acid value of 25 to 70 mg of KOH/g and derive to the extent of at least 80 % from methacrylic acid units which, together with other vinyl and/or (meth)acrylic monomers, are grafted on to at least a portion of the fatty acids,
   (B) from 4 to 95 % by weight, preferably at least 20 % by weight, of an aqueous polymer dispersion based on copolymers of (meth)acrylates and/or butadiene and/or styrene, and/or of an aqueous polyurethane dispersion,
   (C) from 1 to 30 % by weight, preferably from 5 to 20 % by weight, of an adduct of maleic anhydride with drying oils and/or with the unsaturated fatty acids making up such oils and/or with synthetically prepared esters of these fatty acids with diols or polyols, the anhydride structures of this adduct being broken up by water and/or monoalcohols having from 1 to 10 C atoms, and the adduct having an acid value of between 40 and 280 mg of KOH/g, and
   (D) if required, pigments, extenders and/or auxiliaries for paint and/or additives appropriate to the specific application intended,
   with the proviso that the sum of the percentages of the components (A) to (C) equals 100.

2. Water – thinnable coating compositions according to Claim 1, characterised in that the maleic acid adducts employed for the component (C) have a maleic anhydride content of from 5 to 30 % by weight, preferably from 7.5 to 25 % by weight.

3. Use of the coating compositions according to Claims 1 and 2 for brush – on paints and wood finishes.

4. Use of the coating compositions according to Claims 1 and 2 for low – solvent coatings having an amount of organic solvent in the volatile fraction of less than 5 % by weight.

**Revendications**

1. Composition de revêtement séchant à l'air, diluable à l'eau constitué par
   (A) 4 à 95 % en poids, de préférence au moins 30 % en poids, d'une résine alkyde diluable à l'eau, qui présente une teneur de 30 à 70 % en acide gras séchant par oxydation et dont les groupes carboxyle libres correspondant à un indice d'acide de 25 à 70 mg KOH/g proviennent jusqu'à au moins 80 % d'unités d'acide méthacrylique, qui conjointement avec d'autres monomères vinyliques et/ou (méth)acryliques sont greffés sur au moins une partie des acides gras,
   (B) 4 à 95 % en poids, de préférence au moins 20 % en poids, d'une dispersion polymère aqueuse à base de copolymères d'esters de l'acide (méth)acrylique et/ou butadiène et/ou styrol, et/ou d'une dispersion de polyuréthane aqueuse,
   (C) 1 à 30 % en poids, de préférence 5 à 20 % en poids, d'un produit d'addition de l'anhydride de l'acide maléïque à des huiles séchantes et/ou aux acides gras insaturés formant ces huiles et/ou aux esters préparés synthétiquement de ces acides gras avec des di – ou polyols, moyennant quoi leurs structures d'anhydride sont ouvertes par l'eau et/ou des monoalcools ayant 1 à 10 atomes C, et qui présente un indice d'acide entre 40 et 280 mg KOH/g, et
   (D) éventuellement des pigments, des charges et/ou des adjuvants de peinture et/ou additifs correspondant au but d'utilisation respectif,
   dans la mesure où la somme des pourcentages des composants (A) à (C) donne 100.

2. Composition de revêtement diluable à l'eau selon la revendication 1, caractérisée en ce que les produits d'addition de l'acide maléïque mis en oeuvre pour le composant (C) présentent une teneur en anhydride de l'acide maléïque de 5 à 30 % en poids, de préférence de 7,5 à 25 % en poids.

3. Utilisation des compositions de revêtement selon les revendications 1 et 2 pour les peintures au pinceau ou les vernis pour le bois.

4. Utilisation de la composition de revêtement selon les revendications 1 et 2, pour des peintures à faible teneur en solvant, dont la quantité en solvant organique dans la proportion volatile est inférieure à 5 % en poids.